# EUROPEAN PATENT APPLICATION

(11) **EP 4 664 614 A1**
(43) Date of publication of application: **17.12.2025**
(21) Application number: 25154174.4
(22) Date of filing: 27.01.2025
(51) Int. Cl.: H01M 50/103, H01M 50/119, H01M 50/15, H01M 50/159, H01M 50/169, H01M 50/176, H01M 50/342, H01M 50/55, H01M 50/553

(54) **PRISMATIC POWER STORAGE DEVICE**

(30) Priority: 10.06.2024 JP 2024093583
(71) Applicant: Prime Planet Energy & Solutions, Inc., Chuo-ku, Tokyo 103-0022 (JP)
(72) Inventor: FUJIMURA, Satoshi, Tokyo 103-0022 (JP)
(74) Representative: Kuhnen & Wacker Patent- und Rechtsanwaltsbüro PartG mbB

(57) **Abstract**

A prismatic power storage device (1; 101) includes a case (4) having a case body (5) and a rectangular plate-shaped lid (6;106), an electrode body (2) housed in the case (4), a positive terminal member (7;107) extending out through a positive-electrode insert hole (6p,106p) provided in the lid (6;106), and a negative terminal member (8;108) extending out through a negative-electrode insert hole (6n;106n). The lid (6;106) includes a first safety valve (6s1;106s1) provided in a center (6C;106C) of the lid (6;106) and to be opened at a first operating pressure (P1), a second safety valve (6s2;106s2) provided on one side (LH1) relative to a central region and to be operated at a second operating pressure (P2) higher than the first operating pressure (P1), and a third safety valve (6s3;106s3) provided on the other side (LH2) relative to the central region and to be operated at a third operating pressure (P3) higher than the first operating pressure (P1).

## Description

### BACKGROUND

### Technical field

The disclosure relates to a prismatic power storage device including a rectangular parallelepiped box-shaped metal case and an electrode body housed in the case.

### Related Art

In some cases, a secondary battery such as a lithium ion secondary battery, including an electrode body housed in a rectangular parallelepiped metal case, which is hereinafter also simply referred to as a battery, is subjected to a so-called nail penetration test. This test is performed by penetrating a metal rod into the central part of a main side surface of the case, which has a largest area among six surfaces of the case, to pierce a positive electrode plate and a negative electrode plate stacked and housed in the case, and observing behaviors of the battery, e.g., checking whether a safety valve provided in the case operates. This test assumes a situation where the main side surface of the case of a battery mounted in a vehicle collides with another component or part installed in the vehicle due to vehicle accident, crushing the case and the electrode body and causing a short circuit in the electrode body, resulting in abnormal heat generation and gas generation, thus increasing the internal pressure of the case. The test is intended to verify that the safety valve provided in the case can operate to prevent the internal pressure of the case from rising even in such a situation. In the foregoing nail penetration test, the metal rod is penetrated into the main side surface of the case, near its center, because the main side surface has a large area and thus is low in strength, especially low at or near the center, which is likely to be greatly deformed due to crushing and cause a short circuit in the electrode body.

One example of a battery provided with such a safety valve is disclosed in for example Patent Document 1 . The battery in this document includes an electrode body housed in a rectangular parallelepiped box-shaped case. This case includes a bottomed rectangular tube-shaped case body and a lid having a rectangular narrow plate-like shape extending in a longitudinal direction and closing a rectangular opening portion of the case body. The safety valve is provided in this rectangular narrow plate-shaped lid, near the center in the longitudinal direction, between a positive terminal member placed on one side and a negative terminal member placed on the other side in the longitudinal direction.

### Patent Documents

Patent Document 1: Japanese unexamined patent application publication No. 2017-117750 (JP2017-117750A)

### SUMMARY

### Technical Problems

However, the following cases have been found. If the safety valve opens due to the generation of gas in the foregoing nail penetration test, the gas flows toward the safety valve and further fragments of the positive and negative electrode plates and others of the electrode body due to cracks formed in the electrode body fly, or scatter, toward the safety valve along with a flow of the gas. Those fragments and others may block up the safety valve, making it impossible to sufficiently release the gas out through the safety valve.

The present disclosure has been made to address the above problems and findings has a purpose to provide a prismatic power storage device capable of preventing blockage of a safety valve by fragments and others in an electrode body, which may cause insufficient gas release, when the safety valve needs to be opened in case a short circuit occurs in the electrode body, causing abnormal heat generation and hence gas generation.

### Means of Solving the Problems

(1) To achieve the above-mentioned purpose, one aspect of the present disclosure provides a prismatic power storage device comprising: a case having a rectangular parallelepiped box shape, including: a case body made of metal in a bottomed rectangular tube shape with a rectangular opening portion; and a lid made of metal in a rectangular plate shape and closing the rectangular opening portion; an electrode body housed in the case hermetically sealed, the electrode body including a positive current collector part and a negative current collector part; a positive terminal member having one end connected to the positive current collector part, and extending out of the case by passing through a positive-electrode insert hole provided in the lid on one side in a longitudinal direction of the lid; and a negative terminal member having one end connected to the negative current collector part, and extending out of the case by passing through a negative-electrode insert hole provided in the lid on another side in the longitudinal direction, characterized in that the lid includes: a first safety valve provided in a central region in the longitudinal direction, between the positive-electrode insert hole and the negative-electrode insert hole, the first safety valve being to be opened at a first operating pressure; a second safety valve provided on the one side in the longitudinal direction relative to the central region, the second safety valve being to be opened at a second operating pressure higher than the first operating pressure; and a third safety valve provided on the other side in the longitudinal direction relative to the central region, the third safety valve being to be opened at a third operating pressure higher than the first operating pressure.

In this prismatic power storage device, the first safety valve, which is operated at a relatively low operating pressure, is provided in the central region of the lid in the longitudinal direction, between the positive-electrode insert hole and the negative-electrode insert hole of the lid. When the internal pressure of the case rises due to abnormal heat generation and gas generation caused by a short circuit in the electrode body, the first safety valve with a low operating pressure opens first to release the gas from the inside of the battery. This can prevent or reduce the internal pressure of the battery from increasing. In addition, since the first safety valve is placed in the central region near the center of the main side surface where the short circuit is likely to occur, the generated gas can be released quickly.

In this prismatic power storage device, furthermore, the second safety valve and the third safety valve, which are operated at a higher operating pressure than the first safety valve, are additionally provided on one side and the other side in the longitudinal direction relative to the central region. Even when gas flows toward the opened first safety valve and also fragments of the electrode body fly toward the first safety valve, disenabling gas release due to blockage of the first safety valve by the fragments and others, causing the internal pressure to rise again, at least one of the second safety valve or the third safety valve opens to prevent or reduce the internal pressure from rising again. In addition, since two safety valves, i.e., the second safety valve and the third safety valve, are provided, the possibility of preventing the internal pressure from rising again is enhanced by opening of at least one safety valve.

Moreover, the second safety valve is provided on one side in the longitudinal direction relative to the central region where the first safety valve is provided. The third safety valve is provided on the other side in the longitudinal direction relative to the central region. Accordingly, the distance from the center of the main side surface of the case, which is penetrated with a metal rod in a nail penetration test, to each of the second and third safety valves is longer than the distance to the first safety valve. Thus, flying fragments of the electrode body are less likely to reach the second and third safety valves as compared with the first safety valve.

Further, since the second safety valve and the third safety valve open with a delay after the first safety valve opens, it is considered that most of the fragments of the electrode body have already flown toward the first safety valve. From this point of view, fragments of the electrode body are less likely to reach the second and third safety valves. Accordingly, the second and third safety valves are unlikely blocked by the fragments of the electrode body.

Examples of the prismatic power storage device may include secondary batteries, such as a lithium ion secondary battery and a sodium-ion secondary battery, and capacitors, such as a lithium-ion capacitor.

In the present disclosure, the central region of the lid in the longitudinal direction is defined as 30% of the total length of the lid, centered at the lid center in the longitudinal direction.

The electrode body housed in the case may be a flat wound electrode body or a stacked electrode body. For the flat wound electrode body, the positive current collector part of the electrode body, which is connected to the positive terminal member, and the negative current collector part of the electrode body, which is connected to the negative terminal member, may respectively include an exposed portion of a positive current collector foil and an exposed portion of a negative current collector foil, each of which is rolled overlapping in a spiral shape. In the flat wound electrode body and the stacked electrode body, moreover, exposed portions of positive current collector foils and negative current collector foils, each of which protrudes in a tab shape, may also be used as the positive current collector part and the negative current collector part.

(2) In the prismatic power storage device described in (1), the second safety valve is provided on the one side in the longitudinal direction relative to the positive-electrode insert hole.

(3) In the prismatic power storage device described in (1) or (2), the third safety valve provided to the other side in the longitudinal direction relative to the negative-electrode insert hole.

In this prismatic power storage device, the second safety valve is located on one side in the longitudinal direction relative to the positive-electrode insert hole, i.e., outside in the longitudinal direction relative to the positive-electrode insert hole. The third safety valve is located on the other side in the longitudinal direction relative to the negative-electrode insert hole, i.e., outside in the longitudinal direction relative to the negative-electrode insert hole. In this prismatic power storage device, if the first safety valve is blocked by fragments and others of the electrode body and then the second safety valve or the third safety valve opens, allowing gas to flow toward the opened second or third safety valve, fragments of the electrode body may be flown on the gas toward the second or third safety valve. In this prismatic power storage device, however, the positive terminal member or the negative terminal member is located on the way of a flow of gas traveling to the second or third safety valve. These positive terminal member and the negative terminal member also act as interception members that catch flying fragments to prevent the fragments from reaching the second or third safety valve. This prismatic power storage device can therefore reduce the possibility of blocking even the second and third safety valves by fragments.

### BRIEF DESCRIPTION OF THE DRAWINGS

FIG. 1 is a vertical cross-sectional view of a battery in a first embodiment, taken along a line A-A in FIG. 2;
FIG. 2 is a top view of the battery in the first embodiment;
FIG. 3 is a vertical cross-sectional view of a battery in a second embodiment, taken along a line B-B in FIG. 4; and
FIG. 4 is a top view of the battery in the second embodiment.

### DETAILED DESCRIPTION OF THE EXEMPLARY EMBODIMENTS

### First Embodiment

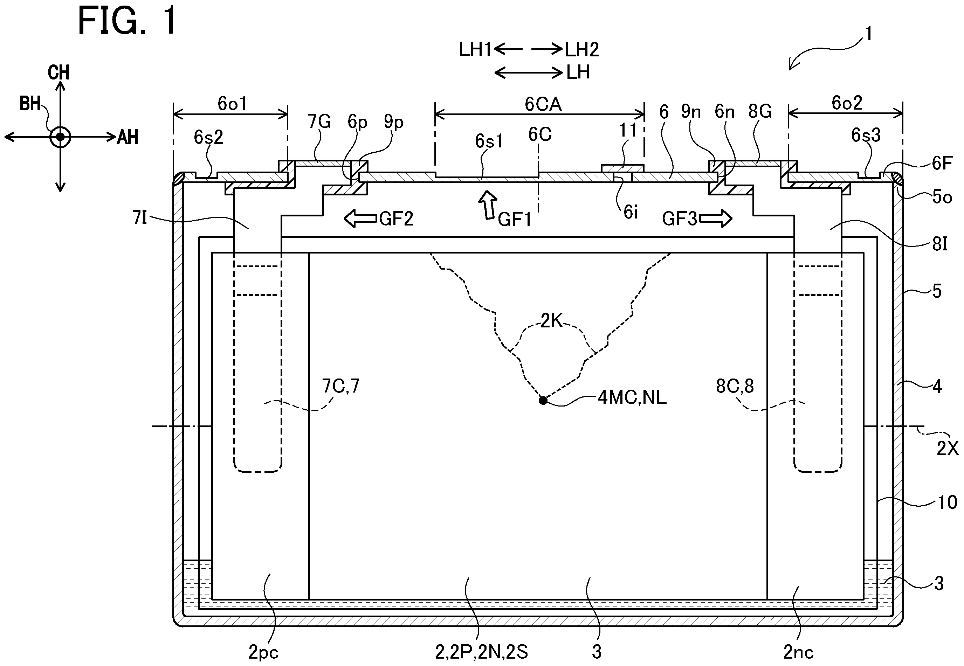

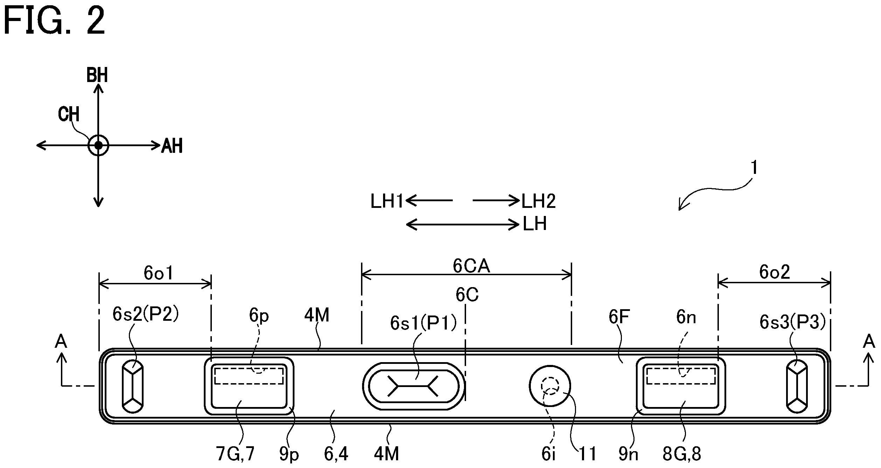

A detailed description of a battery 1 (one example of a prismatic power storage device of the disclosure), which is a lithium ion secondary battery, in a first embodiment will now be given referring to FIGs. 1 and 2. This battery 1 is a prismatic sealed lithium ion secondary battery and is to be mounted in vehicles, such as a hybrid car, a plug-in hybrid car, and an electric car (BEV), and various devices, such as a drone. In the following description, the width direction AH, the thickness direction BH, and the height direction CH of the battery 1 are defined as indicated by arrows in FIGs. 1 and 2.

The battery 1 in the first embodiment includes a rectangular case 4, which is thin in the thickness direction BH, an electrode body 2 housed in the case 4 hermetically sealed, and an electrolyte 3 contained in the case 4 and partly impregnated in the electrode body 2. The case 4 is made of metal (aluminum in the first embodiment) and formed in a rectangular parallelepiped box-like shape. This case 4 includes a bottomed rectangular tube-shaped case body 5 with a rectangular opening portion 5o and a lid 6 welded to the opening portion 5o to close this opening portion 5o. The electrode body 2 is wrapped with a rectangular pouch-shaped insulation film 10 within the case 4. In the case 4, the electrolyte 3 is contained, a part of which is impregnated into the electrode body 2 and the remainder of which accumulates on the bottom of the case 4.

The electrode body 2 housed in the case 4 is a well-known, so-called flat wound electrode body formed of a strip-shaped positive electrode plate 2P and a strip-shaped negative electrode plate 2N, which are wound by interposing a pair of strip-shaped separators 2S, and are depressed into a flat shape in the thickness direction BH perpendicular to the drawing sheet of FIG. 1. This electrode body 2 is oriented sideways in the case 4 so that its winding axis 2X extends in the width direction AH.

In the electrode body 2, the strip-shaped positive electrode plate 2P consists of a positive current collector foil made of an aluminum foil and a positive active material layer overlaid on each side of the foil. The positive active material layers are made of positive active material particles, conductive particles, and a binder. In the first embodiment, the positive active material particles are lithium transition metal composite oxide particles, such as lithium nickel cobalt manganese composite oxide particles, for example. An end portion of the strip-shaped positive electrode plate 2P on one side in the width direction (i.e., a left side in FIG. 1) is a positive current collector part 2pc formed of an exposed portion of the positive current collector foil, which is rolled overlapping in a spiral shape.

On the other hand, in the electrode body 2, the strip-shaped negative electrode plate 2N consists of a negative current collector foil made of a copper foil and a negative active material layer overlaid on each side of the foil. The negative active material layers are made of negative active material particles and a binder. In this embodiment, the negative active material particles are graphite particles. An end portion of the strip-shaped negative electrode plate 2N on the other side in the width direction (i.e., a right side in FIG. 1) is a negative current collector part 2nc formed of an exposed portion of the negative current collector foil, which is rolled overlapping in a spiral shape.

The electrolyte 3 is a non-aqueous electrolyte that includes an organic solvent and a lithium salt containing fluorine, which is a supporting salt. In the first embodiment, the organic solvent is an organic solvent mixture of ethylene carbonate, ethyl methyl carbonate, and dimethyl carbonate. The lithium salt containing fluorine in this embodiment is LiPF₆. Further, the salt concentration of the lithium salt in the electrolyte 3 at the time of pouring is 1.1 M.

The lid 6 of the case 4 has a rectangular narrow plate-like shape extending in the longitudinal direction LH, i.e., a lateral direction corresponding to the width direction AH in FIGs. 1 and 2. This lid 6 is formed with a rectangular positive-electrode insert hole 6p on one side LH1 (the left side in FIGs. 1 and 2) in the longitudinal direction LH and a rectangular negative-electrode insert hole 6n on the other side LH2 (the right side in FIGs. 1 and 2) in the longitudinal direction LH. The lid 6 is further provided with a liquid inlet 6i. Specifically, in the first embodiment, the liquid inlet 6i is located between the negative-electrode insert hole 6n and a first safety valve 6s1 which will be mentioned below. This liquid inlet 6i is hermetically closed with an inlet stopper 11 after pouring of the electrolyte 3.

Assuming that a part of the lid 6, corresponding to a range of 30% of the total length of the lid 6, centered at the center 6C in the longitudinal direction LH, is defined as a central region 6CA, the first safety valve 6s1 is provided within this central region 6CA. To be specific, the first safety valve 6s1 is located in the part of the lid 6, on one side LH1, i.e., on the left in FIGs. 1 and 2, relative to the center 6C of the central region 6CA. This first safety valve 6s1 is a non-return, pressure release type safety valve that opens at a first operating pressure P1. The first safety valve 6s 1 only has to have its center within the central region 6CA. For example, as shown in first embodiment, the entire first safety valve 6s1 may be included in the central region 6CA. As another example, the center of the first safety valve 6s1 in the longitudinal direction LH is included in the central region 6CA, but another part of the first safety valve 6s1 may be located outside the central region 6CA.

In the battery 1 in the first embodiment, a second safety valve 6s2 is provided in the lid 6, outside the central region 6CA and further more outside than the positive-electrode insert hole 6p, that is, in a first hole outside region 6o1 on one side LH1 relative to the positive-electrode insert hole 6p. This second safety valve 6s2 is also a non-return, pressure release type safety valve that opens at a second operating pressure P2 higher (e.g., higher by 10%) than the first operating pressure P1 of the first safety valve 6s1, i.e., P2>P1 and P2=1.1P1.

Further, a third safety valve 6s3 is provided in the lid 6, outside the central region 6CA and further more outside than the negative-electrode insert hole 6n, that is, in a second hole outside region 6o2 on the other side LH2 relative to the negative-electrode insert hole 6n. This third third safety valve 6s3 is also a non-return, pressure release type safety valve that opens at a third operating pressure P3 higher (e.g., 10% higher) than the first operating pressure P1 of the first safety valve 6s1; i.e., P3>P1 and P3=1.1P1. In this first embodiment, the second operating pressure P2 of the second safety valve 6s2 and the third operating pressure P3 of the third safety valve 6s3 are set to be equal, i.e., P1<P2=P3.

However, the second operating pressure P2 and the third operating pressure P3 may be set in a range of 1.05 to 2.0 times the first operating pressure P1, depending on the magnitude of the first operating pressure P1 and the strength of the case 4. This range is set for the following reasons. In consideration of variations in operating pressure of each safety valve, it is preferable to set those operating pressures P2 and P3 to 1.05 times or more the first operating pressure P1 to ensure that the first safety valve 6s1 opens first. On the other hand, it is preferable to set those operating pressures P2 and P3 to 2.0 times or less the first operating pressure P1 to quickly open the second safety valve 6s2 or the third safety valve 6s3 before the internal pressure of the case 4 excessively rises when the first safety valve 6s1 is blocked by flying debris. In the first embodiment, the second operating pressure P2 and the third operating pressure P3 are set to be equal, but may be set to be different from each other; i.e., the second operating pressure P2 may be set lower than the third operating pressure P3 (P2<P3), or the third operating pressure P3 may be lower than the second operating pressure P2 (P3<P2).

The three safety valves 6s1, 6s2, 6s3 in the lid 6 in the first embodiment are each formed by press at the same time a plate material is formed into the lid 6. As an alternative, the lid 6 may be formed in advance with a hole(s) (not shown) for installing a safety valve(s), and then a safety valve member(s) produced separately is hermetically fixed to the lid by welding or adhering.

In the positive-electrode insert hole 6p of the lid 6, a positive terminal member 7, which is formed by bending an aluminum plate into a predetermined shape, is inserted. This positive terminal member 7 is fixed to the lid 6 while being insulated from the lid 6 via a terminal insulation member 9p. The positive terminal member 7 includes a positive outer connecting portion 7G having a rectangular flat plate-like shape, surrounded by the terminal insulation member 9p and exposed to the outside, a positive inner connecting portion 7C connected to the positive current collector part 2pc located on one end (a left end in FIG. 1) of the electrode body 2, and a positive middle portion 7I connecting those portions 7G and 7C.

Similarly, in the negative-electrode insert hole 6n of the lid 6, a negative terminal member 8, which is formed by bending a copper plate into a predetermined shape, is inserted. This negative terminal member 8 is fixed to the lid 6 while being insulated from the lid 6 via a terminal insulation member 9n. The negative terminal member 8 includes a negative outer connecting portion 8G having a rectangular flat plate-like shape, surrounded by the terminal insulation member 9n and exposed to the outside, a negative inner connecting portion 8C connected to the negative current collector part 2nc located on the other end (a right end in FIG. 1) of the electrode body 2, and a negative middle portion 8I connecting those portions 8G and 8C. Thus, the electrode body 2 is fixed to and held by the lid 6 via the positive terminal member 7 and the negative terminal member 8.

This battery 1 is produced as below. The rectangular pouch-shaped insulation film 10 is put on the electrode body 2 fixed to the lid 6 via the positive terminal member 7 and the negative terminal member 8. This electrode body 2 is inserted in the case body 5. Then, the rectangular opening portion 5o of the case body 5 and a circumferential edge portion 6F of the lid 6 are hermetically welded together to close the rectangular opening portion 5o, completing the case 4. Further, the electrolyte 3 is poured into the case 4 through the liquid inlet 6i so that a part of the electrolyte 3 is impregnated in the electrode body 2, and then the liquid inlet 6i is closed with the inlet stopper 11. Thereafter, the battery 1 is completed after undergoing initial charging, high-temperature aging, testing, and others.

Meanwhile, the nail penetration test may be performed on a battery 1 that has been completed but not yet shipped or on a battery 1 that has been shipped and already used. This test assumes a situation where the battery 1 mounted in a vehicle collides with another component or part in the vehicle due to a vehicle accident, crushing the case 4 and the electrode body 2, causing a short circuit in the electrode body 2, resulting in abnormal heat generation and gas generation, thus increasing the internal pressure of the case 4. The test is intended to verify that the safety valve provided in the case 4 can operate to prevent the internal pressure rise even in such a situation. In the nail penetration test, a metal rod NL is penetrated into a central portion (the center 4MC) of the main side surface 4M having a large area and facing to the thickness direction BH, as part of the rectangular parallelepiped case 4. This is because the main side surface 4M having a largest area in the case 4 is low in strength, especially low at or near its center 4MC, which is likely to be greatly deformed due to crushing and cause a short circuit in the electrode body 2.

As one example of the nail penetration test, a metal rod NL made of stainless steel, whose tip is sharply pointed in a semi-spherical shape with a 3-mm diameter, is penetrated into the center 4MC of the main side surface 4M of a battery 1 with 100%SOC and a battery temperature of 60°C, until a part of the electrode body 2 is fully pierced, causing a short circuit to occur in a nail-penetrating portion of the electrode body 2. This causes a large current to flow between the positive electrode plate 2P and the negative electrode plate 2N, resulting in abnormal heat generation. Thus, the organic solvent that forms the electrolyte 3 evaporates and additionally the materials that form the positive electrode plate 2P, negative electrode plate 2N, and separators 2S also evaporate, generating gas, resulting in an increase in internal pressure of the case 4. However, if the internal pressure of the case 4 exceeds the first operating pressure P1 of the first safety valve 6s1, this valve 6s1 opens, releasing gas to the outside therethrough, which prevents or reduces the internal pressure rise.

However, as indicated by broken lines in FIG. 1, for example, some cracks 2K may be formed in the electrode body 2, starting from the metal rod NL penetrating the electrode body 2 or its vicinity. Then, broken pieces, or fragments, of the positive electrode plate 2P, negative electrode plate 2N, and separators 2S of the electrode body 2 fly on a flow GF1 of the gas traveling toward the opened first safety valve 6s1. This first safety valve 6s1 may be blocked, or clogged, by those flying fragments, and thus cannot release gas therethrough, and the internal pressure of the case 4 could rise again.

In contrast, the battery 1 in the first embodiment is additionally provided with the second safety valve 6s2 and the third safety valve 6s3 to be operated respectively at the second operating pressure P2 and third operating pressure P3, which are higher than the first operating pressure P1 of the first safety valve 6s1. Since at least one of those two, second safety valve 6s2 and third safety valve 6s3, opens, it is possible to prevent the internal pressure of the case 4 from rising again. In addition, the two, second safety valve 6s2 and third safety valve 6s3, are provided to enhance the possibility of preventing the internal pressure rise.

Furthermore, the second safety valve 6s2 is located outside the central region 6CA in which the first safety valve 6s1 is provided, that is, on one side LH1 in the longitudinal direction LH relative to the central region 6CA. The third safety valve 6s3 is located on the other side LH2 relative to the central region 6CA. Therefore, the distance from the penetrating metal rod NL to each of the second safety valve 6s2 and the third safety valve 6s3 is longer than the distance to the first safety valve 6s1. Thus, the flying fragments of the electrode body 2 are less likely to reach the second safety valve 6s2 and the third safety valve 6s3 as compared to the first safety valve 6s1, and hence those safety valves 6s2 and 6s3 are unlikely to be blocked by the fragments of the electrode body 2.

In addition, since the second safety valve 6s2 or the third safety valve 6s3 opens with a delay after the first safety valve 6s1 opens, it is considered that most of the fragments of the electrode body 2 have already flown toward the first safety valve 6s1. From this point of view, fragments of the electrode body 2 are less likely to reach the second safety valve 6s2 and the third safety valve 6s3. Accordingly, these valves 6s2 and 6s3 are unlikely blocked by the fragments.

In this battery 1, as described above, if the first safety valve 6s1 is blocked by the fragments and others of the electrode body 2 and then the second safety valve 6s2 or the third safety valve 6s3 opens, and therefore gas flows toward that opened, second safety valve 6s2 or the third safety valve 6s3, there is still a possibility for the fragments of the electrode body 2 to fly on a flow GF2 or GF3 of gas toward the second safety valve 6s2 or the third safety valve 6s3.

In the battery 1, however, the second safety valve 6s2 is located on one side LH1 in the longitudinal direction LH relative to the positive-electrode insert hole 6p, that is, more outside than the positive-electrode insert hole 6p in the longitudinal direction LH. Similarly, the third safety valve 6s3 is located on the other side LH2 in the longitudinal direction LH relative to the negative-electrode insert hole 6n, that is, more outside than the negative-electrode insert hole 6n in the longitudinal direction LH. Therefore, as easily understood from FIG. 1, the positive terminal member 7 connected to the positive current collector part 2pc of the electrode body 2, concretely, the positive middle portion 7I, is located on the way of a flow GF2 of gas traveling toward one side LH1 of the longitudinal direction LH to the second safety valve 6s2. Further, the negative middle portion 8I of the negative terminal member 8 connected to the negative current collector part 2nc of the electrode body 2 is located on the way of a flow GF3 of gas traveling toward the other side LH2 in the longitudinal direction LH to the third safety valve 6s3.

Therefore, if fragments of the electrode body 2 fly toward the second safety valve 6s2 or the third safety valve 6s3, the fragments are likely to be caught on the positive middle portion 7I or the negative middle portion 8I. In other words, the positive middle portion 7I of the positive terminal member 7 and the negative middle portion 8I of the negative terminal member 8 act as interception members that prevent the fragments from reaching the second safety valve 6s2 or the third safety valve 6s3. The battery 1 in the first embodiment can further reduce the possibility of blocking even the second safety valve 6s2 or the third safety valve 6s3 by fragments of the electrode body 2.

### Second Embodiment

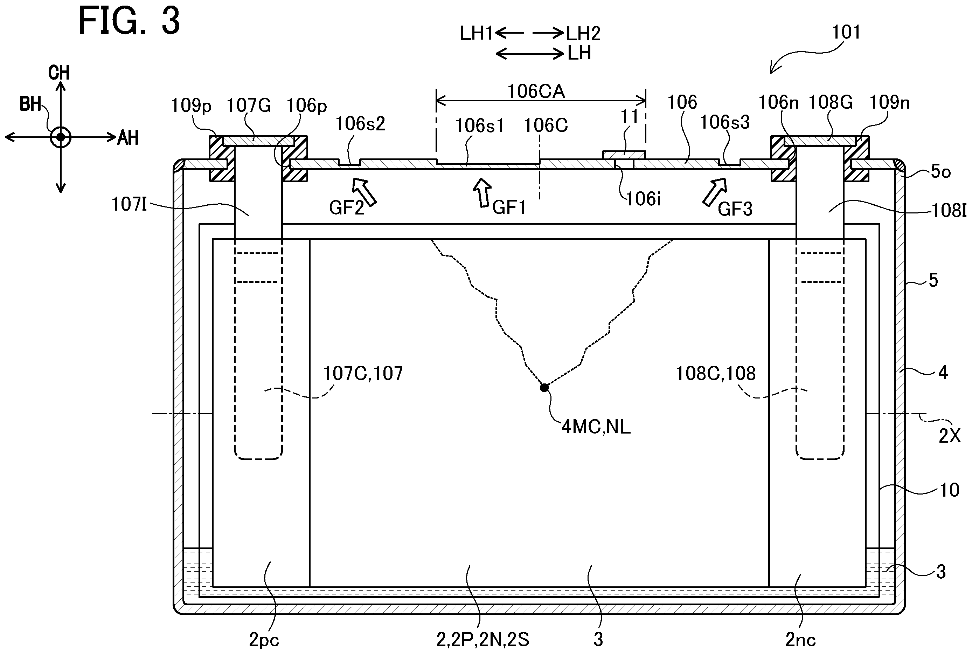

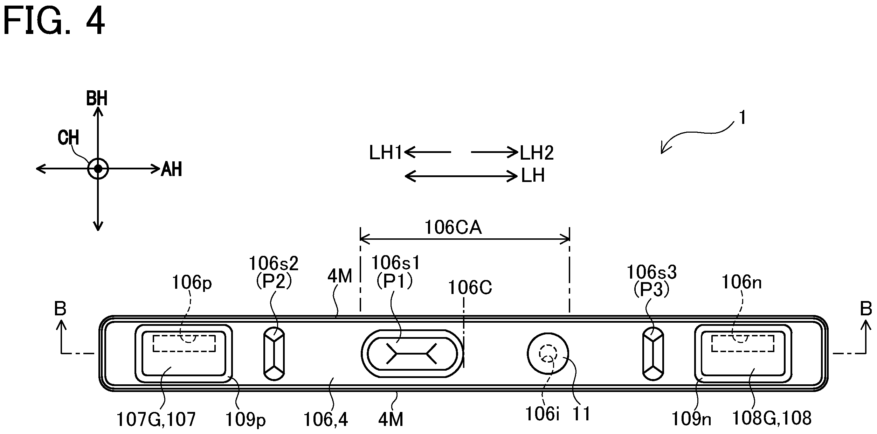

A battery 101 (one example of a secondary battery), which is a lithium ion secondary battery, in a second embodiment will be described below, referring to FIGs. 3 and 4. This battery 101 is a prismatic sealed lithium ion secondary battery, similar to the battery 1 in the first embodiment, except for the placement of a second safety valve 106s2 and a third safety valve 106s3, and others. Therefore, the following description is given with a focus on different parts from those of the first embodiment while omitting or simply mentioning identical or similar parts to those of the first embodiment. In the following description, the width direction AH, thickness direction BH, and height direction CH pf the battery 101 are defined as indicated by arrows in FIGs. 3 and 4.

The battery 101 in the second embodiment also includes a rectangular case 4, which is thin in the thickness direction BH, an electrode body 2 housed in the case 4 hermetically sealed, and an electrolyte 3 contained in the case 4 and partly impregnated in the electrode body 2. The case 4 formed in a rectangular parallelepiped box-like shape includes a case body 5 and a lid 106, different from the lid 6 of the first embodiment, closing the rectangular rectangular opening portion 5o of the case body 5.

The lid 106 of the case 4 in the second embodiment has a rectangular narrow plate-like shape extending in the longitudinal direction LH, as with the lid 6, and is formed with a rectangular positive-electrode insert hole 106p on one side LH1 (the left side in FIGs. 3 and 4) and a rectangular negative-electrode insert hole 106n on the other side LH2 (the right side in FIGs. 3 and 4) in the longitudinal direction LH.

However, as easily understood by comparison between FIG. 4 and FIG. 2, the positive-electrode insert hole 106p of the lid 106 in the second embodiment is located on one side LH1, i.e., more outside, in the longitudinal direction LH compared with the positive-electrode insert hole 6p of the lid 6 in the first embodiment. The negative-electrode insert hole 106n of the lid 106 in the second embodiment is located on the other side LH2, i.e., more outside, in the longitudinal direction LH compared with the negative-electrode insert hole 6n of the lid 6 in the first embodiment.

On the other hand, a first safety valve 106s1 of the lid 106 is provided at the same position as the first safety valve 6s1 of the lid 6, that is, within a central region 106CA. To be concrete, the first safety valve 106s1, which is a non-return, pressure release type safety valve that opens at a first operating pressure P1, is provided in the central region 106CA on one side LH1, i.e., on the left in FIGs. 3 and 4, relative to the center 106C. A liquid inlet 106i of the lid 106 is also provided at the same position as the liquid inlet 6i of the lid 6 and hermetically closed with the inlet stopper 11 after pouring of the electrolyte 3.

In the battery 101 in the second embodiment, furthermore, a second safety valve 106s2 is also provided in the lid 106, outside the central region 106CA, i.e., on one side LH1 relative to the central region 106CA. To be more specific, the second safety valve 106s2 is located on one side LH1 relative to the central region 106CA but more inside (on the other side LH2) than the positive-electrode insert hole 106p. This second safety valve 106s2 is a non-return, pressure release type safety valve, as with the second safety valve 6s2 in the first embodiment, that opens at a second operating pressure P2 higher (e.g., higher by 10%) than the first operating pressure P1 of the first safety valve 106s1; i.e., P2>P1 and P2=1.1P1.

Further, a third safety valve 106s3 is provided in the lid 106, outside the central region 106CA, i.e., on the other side LH2 relative to the central region 106CA. To be more specific, the third safety valve 106s3 is located on the other side LH2 relative to the central region 106CA but more inside (on one side LH1) than the negative-electrode insert hole 106n. This third safety valve 106s3 is a non-return, pressure release type safety valve, as with the third safety valve 6s3 in the first embodiment, that opens at a third operating pressure P3 higher (e.g., higher by 10%) than the first operating pressure P1 of the first safety valve 106s1; i.e., P3>P1 and P3=1.1P1. In the second embodiment, the second operating pressure P2 of the second safety valve 106s2 and the third operating pressure P3 of the third safety valve 106s3 are set to be equal; i.e., P1<P2=P3. The three safety valves 106s1, 106s2, 106s3 in the lid 106 in the second embodiment are each formed by press at the same time a plate material is formed into the lid 106.

In the positive-electrode insert hole 106p of the lid 106, a positive terminal member 107, which is formed by bending an aluminum plate into a predetermined shape, is inserted and fixed to the lid 106 while being insulated from the lid 106 via a terminal insulation member 109p. The positive terminal member 107 includes a positive outer connecting portion 107G having a rectangular flat plate-like shape, surrounded by the terminal insulation member 109p and exposed to the outside, a positive inner connecting portion 107C connected to the positive current collector part 2pc of the electrode body 2, and a positive middle portion 107I connecting those portions 107G and 107C and extending in the height direction CH.

Similarly, in the negative-electrode insert hole 106n of the lid 106, a negative terminal member 108, which is formed by bending a copper plate into a predetermined shape, is inserted and fixed to the lid 106 while being insulated from the lid 106 via a terminal insulation member 109n. The negative terminal member 108 includes a negative outer connecting portion 108G having a rectangular flat plate-like shape, surrounded by the terminal insulation member 109n and exposed to the outside, a negative inner connecting portion 108C connected to the negative current collector part 2nc of the electrode body 2, and a negative middle portion 108I connecting those portions 108G and 108C and extending in the height direction CH.

The battery 101 in the second embodiment is subjected to the nail penetration test, as with the battery 1 in the first embodiment. In this test, the metal rod NL is penetrated into the center 4MC of the main side surface 4M, causing a short circuit to occur in a nail-penetrating portion of the electrode body 2. This causes a large current to flow between the positive electrode plate 2P and the negative electrode plate 2N, resulting in abnormal heat generation and gas generation, causing the internal pressure of the case 4 to rise. However, if the internal pressure of the case 4 exceeds the first operating pressure P1 of the first safety valve 106s1, this valve 106s1 opens, releasing gas to the outside therethrough, which prevents or reduces the internal pressure rise.

However, as indicated by broken lines in FIG. 3, for example, some cracks 2K may be formed in the electrode body 2, starting from the metal rod NL penetrating the electrode body 2, or its vicinity. Then, broken pieces, or fragments, of the electrode body 2 fly on a flow GF1 of the gas traveling toward the opened first safety valve 106s1. This first safety valve 106s1 may be blocked, or clogged, by those flying fragments, and thus cannot release gas therethrough, and the internal pressure of the case 4 could rise again.

In contrast, the battery 101 in the second embodiment is additionally provided with the second safety valve 106s2 and the third safety valve 106s3 to be operated respectively at the second operating pressure P2 and third operating pressure P3, which are higher than the first operating pressure P1 of the first safety valve 106s1. Since at least one of those two, second safety valve 106s2 and third safety valve 106s3, opens, it is possible to prevent the internal pressure of the case 4 from rising again. In addition, the two, second safety valve 106s2 and third safety valve 106s3, are provided to enhance the possibility of preventing the internal pressure rise.

Furthermore, in the second embodiment, the second safety valve 106s2 and the third safety valve 106s3 are provided outside the central region 106CA, that is, located respectively on one side LH1 and the other side LH2 in the longitudinal direction LH relative to the central region 106CA. Therefore, the distance from the penetrating metal rod NL to each of the second safety valve 106s2 and the third safety valve 106s3 is longer than the distance to the first safety valve 106s1. Thus, the flying fragments of the electrode body 2 are less likely to reach the second safety valve 106s2 and the third safety valve 106s3 as compared to the first safety valve 106s1, and hence those safety valves 106s2 and 106s3 are unlikely to be blocked by the fragments of the electrode body 2.

In addition, since the second safety valve 106s2 or the third safety valve 106s3 opens with a delay after the first safety valve 106s1 opens, it is considered that most of the fragments of the electrode body 2 have already flown toward the first safety valve 106s1. From this point of view, fragments of the electrode body 2 are less likely to reach the second safety valve 106s2 and the third safety valve 106s3. Accordingly, these valves 106s2 and 106s3 are unlikely blocked by the fragments.

The disclosure is described in the foregoing first and second embodiments, but is not limited to those embodiments and others. The disclosure may be embodied in other specific forms without departing from the essential characteristics thereof.

In the first embodiment, for example, the second safety valve 6s2 and the third safety valve 6s3 used therein are smaller than the first safety valve 6s1 as shown in FIG. 2, but they may have the same size as the first safety valve 6s1 as long as their placement areas are secured. Further, the second safety valve 6s2 and the third safety valve 6s3 have the same shape and size, but they can have different shapes and sizes from each other.

The first and second embodiments show an example of the battery 1 including the electrode body 2 that is a single flat wound electrode body formed of the strip-shaped positive electrode plate 2P and the strip-shaped negative electrode plate 2N, which are wound and flattened with a pair of separators 2S interposed, and housed in the case 4. As an alternative, the above configuration may be applied to a battery including a stacked electrode body formed of a plurality of positive electrode sheets and a plurality of negative electrode sheets stacked alternately by interposing one of separator sheets, and housed in a case. As another alternative, the above configuration may be applied to a battery including two or more electrode bodies, e.g., three flat wound electrode bodies, housed in a case.

### Reference Signs List

- 1, 101: Battery (Prismatic power storage device)
- 2: Electrode body
- 2pc: Positive current collector part
- 2nc: Negative current collector part
- 4: Case
- 6, 106: Lid
- LH: Longitudinal direction (of lid)
- LH1: One side (in longitudinal direction)
- LH2: Other side (in longitudinal direction)
- 6CA, 106CA: Central region
- 6p, 106p: Positive-electrode insert hole
- 6n, 106n: Negative-electrode insert hole
- 6s1, 106s1: First safety valve
- 6s2, 106s2: Second safety valve
- 6s3, 106s3,: Third safety valve
- P1: First operating pressure
- P2: Second operating pressure
- P3: Third operating pressure
- 7, 107: Positive terminal member
- 7C, 107C: Positive inner connecting portion
- 7I, 107I: Positive middle portion
- 7G, 107G: Positive outer connecting portion
- 8, 108: Negative terminal member
- 8C, 108C: Negative inner connecting portion
- 8I, 108I: Negative middle portion
- 8G, 108G: Negative outer connecting portion
- 9p, 9n, 109p, 109n: Terminal insulation member

## Claims

1. A prismatic power storage device (1; 101) comprising:
a case (4) having a rectangular parallelepiped box shape, including:
a case body (5) made of metal in a bottomed rectangular tube shape with a rectangular opening portion (5o); and
a lid (6; 106) made of metal in a rectangular plate shape and closing the rectangular opening portion (5o);
an electrode body (2) housed in the case (4) hermetically sealed, the electrode body (2) including a positive current collector part (2pc) and a negative current collector part (2nc);
a positive terminal member (7; 107) having one end (7C;107C) connected to the positive current collector part (2pc), and extending out of the case (4) by passing through a positive-electrode insert hole (6p;106p) provided in the lid (6; 106) on one side (LH1) in a longitudinal direction (LH) of the lid (6; 106); and
a negative terminal member (8;108) having one end (8C;108C) connected to the negative current collector part (2nc), and extending out of the case (4) by passing through a negative-electrode insert hole (6n;106n) provided in the lid (6; 106) on another side (LH2) in the longitudinal direction (LH),
**characterized in that** the lid (6; 106) includes:
a first safety valve (6s1;106s1) provided in a central region (6CA;106CA) in the longitudinal direction (LH), between the positive-electrode insert hole (6p;106p) and the negative-electrode insert hole (6n;106n), the first safety valve (6s1;106s1) being to be opened at a first operating pressure (P1);
a second safety valve (6s2;106s2) provided on the one side (LH1) in the longitudinal direction (LH) relative to the central region (6CA;106CA), the second safety valve (6s2;106s2) being to be opened at a second operating pressure (P2) higher than the first operating pressure (P1); and
a third safety valve (6s3;106s3) provided on the other side (LH2) in the longitudinal direction (LH) relative to the central region (6CA;106CA), the third safety valve (6s3;106s3) being to be opened at a third operating pressure (P3) higher than the first operating pressure (P1).

2. The prismatic power storage device according to claim 1, wherein the second safety valve (6s2) is provided on the one side (LH1) in the longitudinal direction (LH) relative to the positive-electrode insert hole (6p).

3. The prismatic power storage device according to claim 1 or 2, wherein the third safety valve (6s3) provided to the other side (LH2) in the longitudinal direction (LH) relative to the negative-electrode insert hole (6n).
